# FASCICULE DE BREVET EUROPEEN

(11) **EP 1 358 040 B1**
(45) Date de publication et mention de la délivrance du brevet: **13.10.2004**
(21) Numéro de dépôt: 01999456.5
(22) Date de dépôt: 07.12.2001
(51) Int. Cl.: B23Q 1/54, F16C 11/12, B25J 17/02

(54) **MACHINE-OUTIL NOTAMMENT A ARCHITECTURE PARALLELE ADOPTANT DES ARTICULATIONS A DEFORMATION**
"WERKZEUGMASCHINE, INSBESONDERE IN PARALLELBAUART MIT VERFORMTEN GELENKEN"
MACHINE-TOOL IN PARTICULAR WITH PARALLEL ARCHITECTURE ACCOMMODATING DEFORMED ARTICULATIONS

(30) Priorité: 08.12.2000 FR 0016212
(43) Date de publication de la demande: 05.11.2003
(73) Titulaire: Comau Systèmès France, 78191 Trappes cedex (FR)
(72) Inventeur: FIORONI, Claude, F-81100 Castres (FR)
(74) Mandataire: Richebourg, Michel François
(86) Numéro de dépôt international: PCT/FR2001/003865
(87) Numéro de publication internationale: WO 2002/045903

(56) Documents cités:
- EP-A- 1 013 949
- CH-A- 375 959
- DE-A- 19 920 776
- FR-A- 2 779 080
- US-A- 5 388 935
- PATENT ABSTRACTS OF JAPAN vol. 011, no. 293 (P-619), 22 septembre 1987 (1987-09-22) -& JP 62 088008 A (HITACHI LTD), 22 avril 1987 (1987-04-22)

## Description

### DOMAINE D'APPLICATION DE L'INVENTION

La présente invention a trait au domaine des machines-outils d'usinage à très grande vitesse à structure parallèle et notamment aux adaptations autorisant le guidage des éléments constitutifs de ladite structure parallèle.

### DESCRIPTION DE L'ART ANTÉRIEUR

Une machine-outil d'usinage à grande vitesse telle celle décrite dans la demande de brevet n° WO 99/61198 au nom de la demanderesse et illustrée en figure 1, comprend classiquement des barres qui lient les moyens de mise en mouvement et l'organe mobile à mettre en mouvement. Dans le cadre de la machine-outil illustrée, ces barres ont pour fonction d'assurer la transformation de mouvements selon trois directions parallèles, en des mouvements selon trois directions orthogonales.

Le document FR-2 779 080-A décrit une machine-outil selon le préambule de la revendication 1.

Afin d'autoriser et de guider la pluralité de mouvements qu'est susceptible de proposer une telle structure parallèle, lesdites barres sont classiquement équipées à leurs extrémités, d'articulations permettant une rotation selon au moins deux axes. Néanmoins, le déplacement devant être réalisé de façon isostatique, la multiplication de ces liaisons requiert la présence d'articulations de type cardan pour autoriser une rotation supplémentaire dans l'axe desdites barres.

Ces liaisons ou ces articulations sont aujourd'hui réalisées par des moyens faisant intervenir des billes de roulement. Or, ces moyens présentent plusieurs inconvénients dont les principaux sont décrits ci-après.

Les liaisons à billes requièrent un entretien constant et ne peuvent proposer, dans le cadre d'une application en usinage à très grande vitesse, qu'une durée de vie limitée du fait de la création d'un jeu de fonctionnement de plus en plus grand. En effet, l'usinage à très grande vitesse a pour désavantage de provoquer une usure prématurée des moyens de guidage classiques par corrosion de surface (dégradation tribologique).

Ceci est en partie dû aux contraintes dynamiques élevées imposées par l'usinage à très grande vitesse qui provoque un phénomène vibratoire à haute fréquence sur la structure parallèle et donc sur les éléments qui la constituent.

Cette usure prématurée est difficilement quantifiable et oblige les utilisateurs de telles machines-outils à changer régulièrement et prématurément les pièces susceptibles d'être usées. Un tel changement de l'ensemble des articulations d'une machine-outil d'usinage à grande vitesse à structure parallèle implique une immobilisation de cette dernière, l'arrêt de la chaîne de fabrication à laquelle elle participe, la réalisation de nouveaux tests de précision avant remise en marche, etc...

Les critères de précision dans les usinages réalisés sont aujourd'hui tels que le manque de rigidité de la structure parallèle du à une usure de moyens classiques de guidage ou de liaison, est difficilement toléré. De même, les temps d'immobilisation et les coûts de remplacement inhérents à ce type de liaison et d'application, grèvent considérablement le budget d'exploitation d'une telle machine-outil.

L'absence ou le ralentissement de l'usure et la rigidité des liaisons sont des critères auxquels répondent les pivots fictifs. Ces articulations, souvent limitées à un seul degré de liberté (une rotation), utilisent la déformation contrôlée d'un matériau pour donner la liberté angulaire requise. Ainsi, par exemple, les articulations décrites dans les demandes de brevet EP 0 459 057, FR 2 738 602, DE 195 39 581, CH 375 959, US 2 950 079, FR 2 666 630, US 4 297 904, EP 1 013 949 définissent des pivots fictifs, à partir de la déformation de zones de liaison entre une partie fixe et une partie mobile.

### DESCRIPTION DE L'INVENTION

Partant de cet état de fait et à partir d'un cahier des charges pré-établi, la demanderesse a mené des recherches qui ont abouti à la conception et à la réalisation d'une machine-outil adoptant une solution technologique permettant d'obvier aux inconvénients inhérents au manque de rigidité des structures parallèles, en exploitant et en adaptant les caractéristiques des pivots fictifs.

Cette machine-outil d'usinage à très grande vitesse est définie à la revendication 1.

L'utilisation d'une association de pivots fictifs est particulièrement avantageuse en ce que ce type de liaison fonctionne par déformation de matériau et assure donc, tout en autorisant le mouvement, une plus grande rigidité de l'articulation. De même, une association de pivots fictifs permet non seulement lesdits mouvements avec une plus grande rigidité mais autorise également la torsion, ce qui évite l'utilisation des liaisons de type cardan. Ce type d'articulation ne nécessite pas en outre d'entretien particulier du fait que la liaison n'est pas réalisée par guidage ou par frottement. Aucune dégradation tribologique n'est à craindre contrairement aux articulations à billes classiquement utilisées. Ces caractéristiques ont pour conséquences, que la machine-outil d'usinage de l'invention aura une meilleure précision que celles déjà existantes, et que son entretien ainsi que son exploitation seront moins onéreux aussi bien en temps qu'en matériel.

Cette caractéristique principale de l'invention ne constitue pas une simple association ou une association évidente de deux dispositifs connus. En effet, ce sont les nouveaux critères de précision d'usinage à très grande vitesse et de diminution des coûts d'entretien d'un cahier des charges, qui ont amené la demanderesse à réaliser ces recherches. Aussi, le besoin auquel répond la caractéristique principale. de l'invention est fondamentalement nouveau.

L'utilisation de pivots fictifs pour le guidage des bras constituant la structure parallèle d'une machine-outil d'usinage à très grande vitesse constitue en outre une grande nouveauté en ce que les concepteurs dans le domaine des machines-outils ont tendance à concevoir sur la base d'articulations connues et maîtrisées. Ainsi, la réalisation d'articulations associant une pluralité de pivots fictifs constitue également une rupture dans le cheminement normal des concepteurs de machines-outils.

De plus, cette caractéristique n'associe pas simplement un pivot fictif à une structure parallèle mais requiert une association de pivots fictifs pour répondre aux critères spécifiques d'articulation fixés par l'application visée à savoir, autoriser la mise en mouvement et le guidage isostatique des bras constituant une structure parallèle, lesquels requièrent plus d'un degré de liberté.

L'invention concerne également l'articulation à déformation conçue pour cette machine-outil et qui peut être utilisée séparément.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant, à titre d'exemple non limitatif, un mode de réalisation d'une machine-outil et d'une articulation à déformation conforme à l'invention.

### BRÈVE DESCRIPTION DES DESSINS

La figure 1 est une vue en perspective d'une machine-outil à structure parallèle de l'arrière-plan technologique,
la figure 2 est une vue schématique en perspective d'un mode de réalisation d'une articulation d'une machine-outil conforme à l'invention,
la figure 3 est une vue schématique en perspective éclatée d'un détail de l'articulation de la figure 2,
la figure 4 est un schéma cinématique de l'articulation de la figure 2.

### DESCRIPTION DES MODES DE RÉALISATION PRÉFÉRÉS

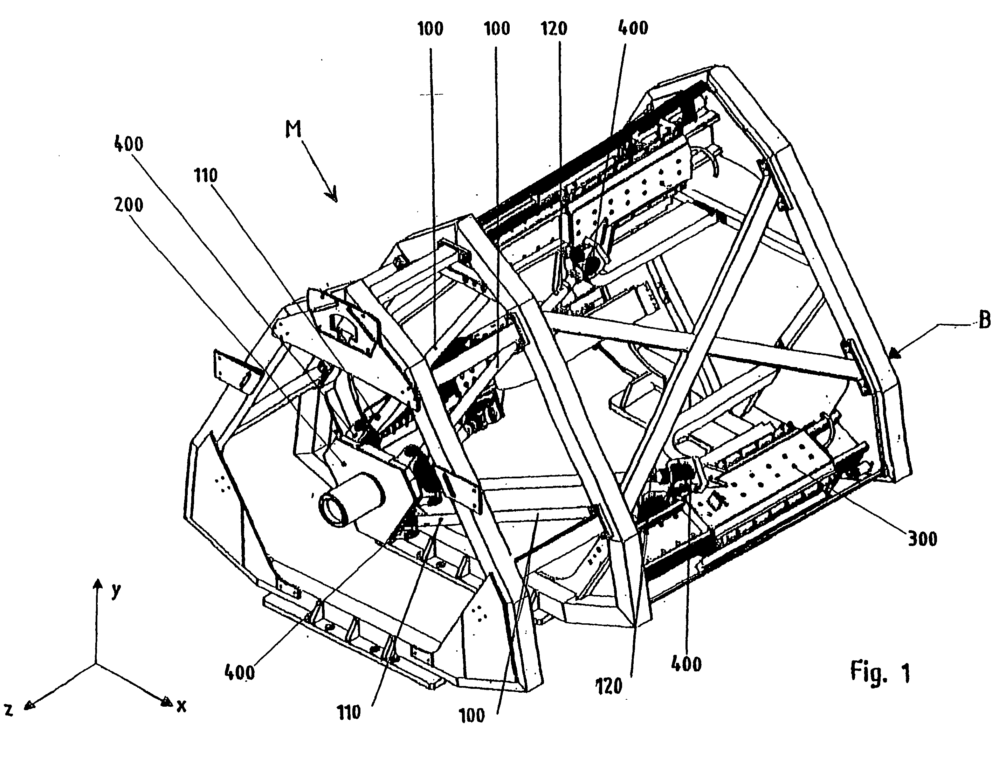

Telle qu'illustrée sur le dessin de la figure 1, la machine-outil d'usinage à très grande vitesse référencée M dans son ensemble est du type de celle comprenant des barres de liaison 100 dont une première extrémité 110 est en liaison avec un organe mobile 200 assurant le support d'au moins un outil (non illustré) et dont la deuxième extrémité 120 est en liaison avec au moins un moyen de mise en mouvement 300 par rapport à un bâti référencé B. Selon le mode de réalisation illustré, lesdites barres 100 sont au nombre de six et sont liées par leur deuxième extrémité 120, deux à deux, à des moyens de mise en mouvement 200, qui sont donc au nombre de trois. Les premières extrémités 110 sont, quant à elles, liées deux à deux à un même côté de l'organe mobile 200 lequel prend ici la forme d'un plateau triangulaire, chaque côté accueillant la première extrémité 110 de deux barres de liaison 100. Dans le cadre du mode de réalisation non limitatif de la machine outil M illustrée, l'architecture parallèle a été conçue de façon à ce que le mouvement séparé ou de concert des trois moyens de mise en mouvement 300 selon l'axe Z permette le déplacement rectiligne selon les axes X, Y et Z de l'organe mobile 200.

Selon l'invention, les liaisons 400 aux extrémités desdites barres 100 sont constituées par une association de pivots fictifs de façon à former une articulation dont les degrés de liberté autorisent la mise en mouvement de la structure parallèle.

Bien que cette caractéristique soit une caractéristique idéale, il est possible que la structure parallèle soit mixte à savoir que, seule une partie desdites liaisons 400, est réalisée au moyen d'une association de pivots fictifs. En effet, il est possible que pour atteindre la rigidité et en conséquence la précision requises, un nombre limité d'articulations 400 à pivots fictifs soit suffisant.

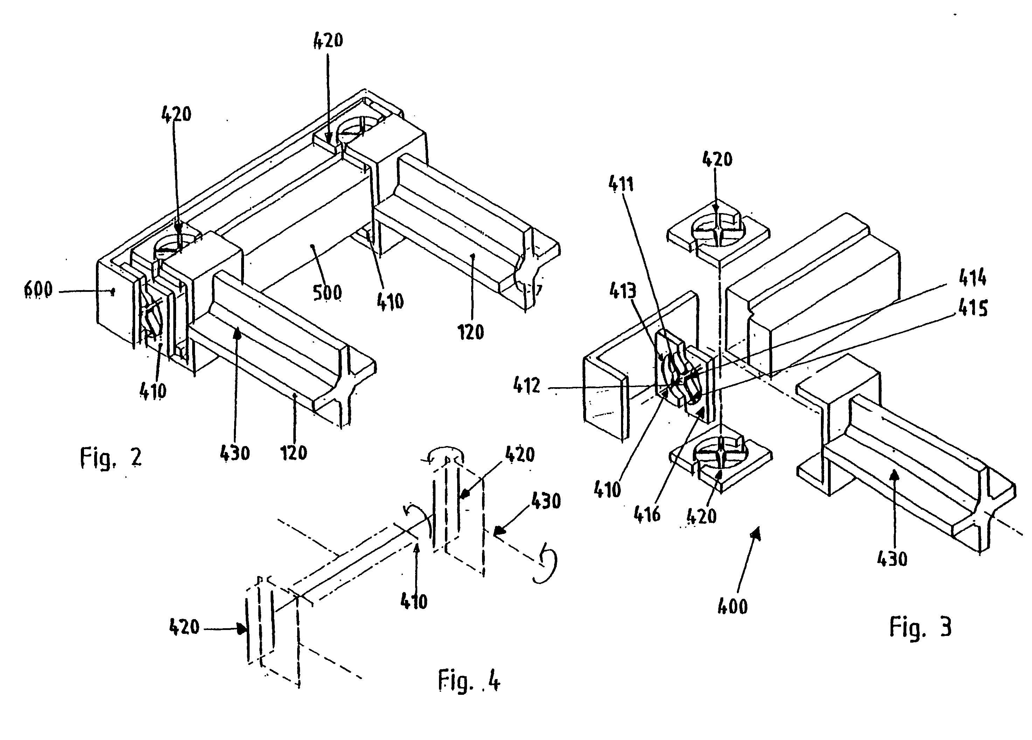

Comme illustrée plus en détail sur le dessin de la figure 3, chaque articulation 400 est formée par trois pivots fictifs 410, 420, 430 dont les axes sont perpendiculaires les uns par rapport aux autres.

Selon une caractéristique particulièrement avantageuse de l'invention, le profil des susdites barres de liaison 100 est préformé de façon à ce qu'il accepte sans franchir sa limite élastique une déformation en torsion de sorte qu'un des pivots fictifs formant l'articulation soit réalisé par l'élasticité en torsion de la barre 100 ou l'extrémité de barre 120 ou 110 elle-même. Ce mode de réalisation d'un pivot fictif est particulièrement utile dans le cadre du degré de liberté en rotation autour de l'axe longitudinal des barres de liaison 100 qui était jusqu'ici autorisé par des liaisons de type "cardan". Ainsi, selon le mode de réalisation non limitatif illustré, le pivot fictif 430 est constitué par la barre 100 ou l'extrémité 110 ou 120 de barre qui adopte un profil autorisant la torsion selon un nombre limité de degrés. Cette barre de liaison 100 adopte au moins sur son extrémité 110 ou 120 le profil illustré en forme de croix particulièrement adapté à accepter des contraintes de torsions. Selon le choix technologique envisagé par la demanderesse, la barre 100 ou son extrémité sont profilées de sorte qu'elle accepte une rotation de plus ou moins un degré.

Lorsque le nombre de degrés nécessaire pour la rotation est plus important, selon un mode de réalisation illustré mais non limitatif, lesdits pivots fictifs 410, 420, sont formés par au moins un sous-ensemble déformable comprenant une croix dont les extrémités de deux premiers bras sont liées par une première platine et les extrémités des deux autres bras liées par une seconde platine., Plus précisément, le pivot fictif 410 est formé par une croix dont les extrémités de deux bras 411 et 412 sont liées par une première platine 413 et les extrémités des deux autres bras 414 et 415 liées par une seconde platine 416.

Comme illustrés sur les dessins de la figure 2 et de la figure 3, les pivots fictifs assurent la liaison pivot par paire avec l'intersection de la croix qui les constitue comme axe de rotation théorique.

Comme illustrés sur le schéma cinématique constitué par le dessin de la figure 4, les axes de ces pivots fictifs sont perpendiculaires les uns par rapport aux autres. Selon les modes de réalisation non limitatifs de pivots fictifs illustrés, ces derniers assurent une liaison en rotation selon plus ou moins 20 degrés.

De plus, comme illustrées par la figure 2, lorsque la machine-outil est du type de celle comme illustrée en figure 1 où la mise en mouvement de l'organe mobile 200 est réalisée au moyen de trois paires de bras 100, les paires étant chacune liée à une de leurs extrémités 120 à un seul moyen de mise en mouvement 300, lesdites barres de liaison 100 formant une paire sont liées à une même première traverse mobile 500 laquelle est liée par au moins un pivot fictif 420 et/ou 410 à une deuxième traverse 600 fixée au dit moyen de mise en mouvement 300 (non illustré sur la figure 2).

L'articulation à déformation adaptée à une machine outil du type de celle illustrée peut être appliquée sur d'autres machines ou dispositifs. Cette articulation est remarquable en ce qu'elle est formée par une pluralité de pivots fictifs dont les degrés de liberté associés permettent d'assurer quasiment la fonction d'une rotule. En effet, l'articulation imaginée par la demanderesse présente des caractéristiques de rigidité et d'absence de nécessité d'entretien dues aux dégradations tribologiques, puisque, les pivots fictifs la constituant assurent les liaisons sans frottement.

On comprend que la machine-outil et l'articulation à déformation, qui viennent d'être ci-dessus décrites et représentées, l'ont été en vue d'une divulgation plutôt que d'une limitation. Bien entendu, divers aménagements, modifications et améliorations pourront être apportés à l'exemple ci-dessus, comme défini dans les revendications ci-jointes.

## Revendications

1. Machine-outil (M) d'usinage à très grande vitesse du type de celle constituée d'une structure parallèle comprenant des barres de liaison (100) dont une première extrémité (110) est en liaison avec un organe mobile (200) assurant le support d'au moins un outil et dont la deuxième extrémité (120) est en liaison avec au moins un moyen de mise en mouvement (300) par rapport à un bâti (B), lesdites barres étant équipées à leurs extrémités de liaisons (400) permettant une rotation selon au moins deux axes, **CARACTÉRISÉE PAR LE FAIT QUE** les liaisons (400) aux extrémités (110 et 120) desdites barres (100) sont constituées par une association de pivots fictifs (410, 420, 430) de façon à former une articulation dont les degrés de liberté autorisent la mise en mouvement de la structure parallèle, et le profil des susdites barres de liaison (100) est préformé de façon à ce qu'il accepte sans franchir sa limite élastique, une déformation en torsion de sorte qu'un des pivots fictifs (430) formant l'articulation (400) soit réalisé par l'élasticité de la barre (100) elle-même.

2. Machine-outil (M) selon la revendication 1, **CARACTÉRISÉE PAR LE FAIT QUE** les axes des pivots fictifs (410, 420, 430) sont perpendiculaires les uns par rapport aux autres.

3. Machine-outil (M) selon la revendication 2, **CARACTÉRISÉE PAR LE FAIT QUE** seule une partie desdites liaisons (400) est réalisée au moyen d'une association de pivots fictifs.

4. Machine-outil (M) selon la revendication 1, **CARACTÉRISÉE PAR LE FAIT QUE** chaque articulation (400) est formée par trois pivots fictifs (410, 420, 430) dont les axes sont perpendiculaires les uns par rapport aux autres.

5. Machine-outil (M) selon la revendication 1, **CARACTÉRISÉE PAR LE FAIT QUE** lesdits pivots fictifs (410, 420, 430) sont formés par au moins un sous-ensemble déformable comprenant une croix dont les extrémités de deux bras (411 et 412) sont liées par une première platine (413) et les extrémités des deux autres bras (414 et 415) liées par une seconde platine (416).

6. Machine-outil (M) selon la revendication 1, du type de celle où la mise en mouvement de l'organe mobile (200) est réalisée au moyen de trois paires de bras (100), les paires étant chacune liée à une de leurs extrémités (120) à un seul moyen de mise en mouvement (300), **CARACTÉRISÉE PAR LE FAIT QUE** lesdites barres de liaison (100) formant une paire sont liées à une même première traverse mobile (500) laquelle est liée par au moins un pivot fictif (410 et 420) à une deuxième traverse (600) fixée au dit moyen de mise en mouvement (300).

7. Machine-outil (M) selon la revendication 1, **CARACTÉRISÉE PAR LE FAIT QUE** la barre de liaison (100) ou son extrémité (110 ou 120) adopte un profil autorisant la torsion.

8. Machine-outil (M) selon la revendication 1, **CARACTÉRISÉE PAR LE FAIT QUE** la barre de liaison (100) adopte au moins sur son extrémité (110 ou 120) un profil en forme de croix particulièrement adapté à accepter des contraintes de torsions.

## Patentansprüche

1. Spanende Höchstgeschwindigkeits-Werkzeugmaschine (M) des Typs, der aus einer parallelen Struktur gebildet ist, die Verbindungsstangen (100) umfasst, deren erstes Ende (110) mit einem beweglichen Organ (200) in Verbindung ist, das für den Halt mindestens eines Werkzeugs sorgt und deren zweites Ende (120) mit mindestens einem Mittel (300) zum Bewegen in Bezug auf ein Gestell (B) in Verbindung ist, wobei die Stangen an ihren Enden mit Verbindungen (400) ausgestattet sind, die eine Drehung um mindestens zwei Achsen erlauben, **dadurch gekennzeichnet, dass** die Verbindungen (400) an den Enden (110 und 120) der Stangen (100) durch eine Kombination von ideellen Drehzapfen (410, 420, 430) gebildet sind, derart, dass ein Gelenk gebildet wird, dessen Freiheitsgrade die Bewegung der parallelen Struktur erlauben, und dass das Profil der Verbindungsstangen (100) derart vorgeformt ist, dass es, ohne seine Elastizitätsgrenze zu überschreiten, eine Verdrehverformung akzeptiert, so dass einer der ideellen Drehzapfen (430), die das Gelenk (400) bilden, durch die Elastizität der Stange (100) selbst gebildet wird.

2. Werkzeugmaschine (M) nach Anspruch 1, **dadurch gekennzeichnet, dass** die Achsen der ideellen Drehzapfen (410, 420, 430) zueinander senkrecht sind.

3. Werkzeugmaschine (M) nach Anspruch 2, **dadurch gekennzeichnet, dass** nur ein Teil der Verbindungen (400) mittels einer Kombination von ideellen Drehzapfen gebildet wird.

4. Werkzeugmaschine (M) nach Anspruch 1, **dadurch gekennzeichnet, dass** jedes Gelenk (400) durch drei ideelle Drehzapfen (410, 420, 430) gebildet wird, deren Achsen zueinander senkrecht sind.

5. Werkzeugmaschine (M) nach Anspruch 1, **dadurch gekennzeichnet, dass** die ideellen Drehzapfen (410, 420, 430) durch mindestens eine verformbare Untereinheit gebildet wird, die ein Kreuz umfasst, bei dem die Enden von zwei Armen (411 und 412) durch eine erste Platte (413) und die Enden der beiden anderen Arme (414 und 415) durch eine zweite Platte (416) verbunden sind.

6. Werkzeugmaschine (M) nach Anspruch 1, von dem Typ, bei dem die Bewegung des beweglichen Organs (200) mit Hilfe von drei Paaren von Armen (100) erfolgt, wobei die Paare an einem ihrer Enden (120) jeweils mit einem einzigen Bewegungsmittel (300) verbunden sind, **dadurch gekennzeichnet, dass** die Verbindungsstangen (100), die ein Paar bilden, mit einer gleichen ersten beweglichen Traverse (500) verbunden sind, die durch mindestens einen ideellen Drehzapfen (410 und 420) mit einer zweiten Traverse (600) verbunden ist, die an dem genannten Bewegungsmittel (300) befestigt ist.

7. Werkzeugmaschine (M) nach Anspruch 1, **dadurch gekennzeichnet, dass** die Verbindungsstange (100) oder ihr Ende (110 oder 120) ein Profil aufweist, das die Verdrehung erlaubt.

8. Werkzeugmaschine (M) nach Anspruch 1, **dadurch gekennzeichnet, dass** die Verbindungsstange (100) mindestens an ihrem Ende (110 oder 120) ein kreuzförmiges Profil aufweist, das besonders geeignet ist, Verdrehungsspannungen aufzunehmen.

## Claims

1. Machine-tool (M) for very high-speed machining consisting of a parallel structure comprising link bars (100), a first end of which (110) is linked to a mobile member (200) supporting at least one tool, and a second end of which (120) is linked to at least one means for setting in motion (300), with respect to a frame (B), said bars being equipped at their first and second ends with linkages (400) that permit a rotation along at least two axes, **CHARACTERIZED BY THE FACT THAT** the linkages (400) at the ends (110 and 120) of the said bars (100) are constituted by a combination of fictitious pivots (410, 420, 430) so as to form a joint, the degrees of freedom of which permit setting the parallel structure in motion, and the profile of said link bars (100) is such that they will accept torsional deformation without reaching their elastic limit, so that a fictitious pivot (430) forming the joint (400) is realized by the elasticity of the bar (100) itself.

2. Machine-tool (M) according to Claim 1, **CHARACTERIZED BY THE FACT THAT**, the axes of fictitious pivots (410, 420, 430) are perpendicular to one another.

3. Machine-tool (M) according to Claim 2, **CHARACTERIZED BY THE FACT THAT** only a part of said linkages (400) is produced by a combination of fictitious pivots.

4. Machine-tool (M) according to Claim 1, **CHARACTERIZED BY THE FACT THAT** each joint (400) is formed by three fictitious pivots (410, 420, 430), the axes of which are perpendicular to one another.

5. Machine-tool (M) according to Claim 1, **CHARACTERIZED BY THE FACT THAT** said fictitious pivots (410, 420, 430) are formed by at least one deformable subassembly comprising a cross having four arms, the ends of the two arms (411 and 412) of which are linked to a first plate (413) and the ends of the two other arms (414 and 415) are linked to a second plate (416).

6. Machine-tool (M) according to Claim 1, of the type where the setting in motion of the mobile member (200) is carried out with the aid of three pairs of arms (100), each of the pairs being linked at one of their ends (120) to a single means of setting in motion (300), **CHARACTERIZED BY THE FACT THAT** said link bars (100) forming a pair are linked to the same first mobile crosspiece (500), which is linked by at least one fictitious pivot (410 and 420) to a second crosspiece (600) attached to said means of setting in motion (300).

7. Machine-tool (M) according to Claim 1, **CHARACTERIZED BY THE FACT THAT** the link bar (100) or its end (110 or 120) has a profile adapted to accept torsional stresses.

8. Machine-tool (M) according to Claim 1, **CHARACTERIZED BY THE FACT THAT** the link bar (100) has at least on its end (110 or 120) a profile in the form of a cross, which is particularly suitable for accepting torsional stresses.
